# EUROPÄISCHE PATENTSCHRIFT

(11) **EP 2 847 775 B1**
(45) Veröffentlichungstag und Bekanntmachung des Hinweises auf die Patenterteilung: **03.06.2020**
(21) Anmeldenummer: 13715980.2
(22) Anmeldetag: 11.04.2013
(51) Int. Cl.: H01G 4/30, H01G 4/232, H01G 4/12

(54) **KERAMISCHER VIELSCHICHTKONDENSATOR**
CERAMIC MULTILAYER CAPACITOR
CONDENSATEUR MULTICOUCHE CÉRAMIQUE

(30) Priorität: 08.05.2012 DE 102012104033
(43) Veröffentlichungstag der Anmeldung: 18.03.2015
(73) Patentinhaber: TDK Electronics AG, 81671 München (DE)
(72) Erfinder: ENGEL, Günter, A-8430 Leibnitz (AT); SCHOSSMANN, Michael, A-8530 Deutschlandsberg (AT); KOINI, Markus, A-8054 Seiersberg (AT); TESTINO, Andrea, I-16162 Genoa (IT); HOFFMANN, Christian, 81825 München (DE)
(74) Vertreter: Epping - Hermann - Fischer
(86) Internationale Anmeldenummer: PCT/EP2013/057614
(87) Internationale Veröffentlichungsnummer: WO 2013/167338

(56) Entgegenhaltungen:
- EP-A2- 0 335 358
- US-A- 4 584 629
- US-A- 6 052 272
- US-A1- 2008 049 377
- US-A1- 2008 165 468
- US-A1- 2008 174 931
- US-A1- 2011 111 947
- US-A1- 2011 141 653
- US-B1- 6 473 291
- US-B1- 6 621 682

## Beschreibung

Es wird ein keramischer Vielschichtkondensator, der vorzugsweise für Hochleistungsanwendungen geeignet ist, angegeben. Der Vielschichtkondensator kann beispielsweise als Filterelement bei einem AC/DC- oder DC/DC-Wandler eingesetzt werden.

In der Druckschrift WO 2011/085932 A1 ist ein Kondensator beschrieben, der ein Heizelement sowie einen Kondensatorbereich mit dielektrischen Schichten und zwischen den Schichten angeordneten Innenelektroden umfasst, wobei das Heizelement und der Kondensatorbereich thermisch leitend miteinander verbunden sind.

In den Druckschriften US 2011/111947 A1, US 6 052 272 A, US 6 621 682 B1, EP 0 335 358 A2, US 4 584 629 A, US 2008/165468 A1, US 6 473 291 B1, US 2008/174931 A1, US 2008/049377 A1 und US 2011/0141653 A1 sind Vielschichtkondensatoren beschrieben.

Es ist eine zu lösende Aufgabe zumindest einiger Ausführungsformen, einen keramischen Vielschichtkondensator anzugeben, der im Vergleich zu bekannten Vielschichtkondensatoren verbesserte Eigenschaften, wie zum Beispiel einen besonders niedrigen ESR-Wert (equivalent series resistance, äquivalenter Serienwiderstand), aufweist.

Diese Aufgabe wird durch einen Gegenstand gemäß dem unabhängigen Patentanspruch gelöst. Vorteilhafte Ausführungsformen und Weiterbildungen des Gegenstands gehen weiterhin aus den abhängigen Patentansprüchen, der nachfolgenden Beschreibung und aus den Zeichnungen hervor.

Ein keramischer Vielschichtkondensator gemäß zumindest einer Ausführungsform weist einen Grundkörper auf. Vorzugsweise weist der Grundkörper eine Quaderform auf. Der Grundkörper umfasst dielektrische Schichten, die entlang einer Schichtstapelrichtung zu einem Stapel angeordnet sind. Die dielektrischen Schichten sind vorzugsweise als keramische Schichten ausgebildet. Weiterhin umfasst der Grundkörper erste und zweite Elektrodenschichten, die zwischen den keramischen Schichten angeordnet sind. Beispielsweise kann jeweils eine erste und eine zweite Elektrodenschicht in einer gleichen Schichtebene voneinander beabstandet angeordnet sein. Weiterhin können die ersten und zweiten Elektrodenschichten jeweils in verschiedenen Schichtebenen des Stapels angeordnet sein.

Erfindungsgemäß umfasst der Grundkörper eine erste Außenkontaktierung. Die Außenkontaktierung ist auf einer ersten Seitenfläche des Grundkörpers angeordnet und mit den ersten Elektrodenschichten elektrisch leitend verbunden. Vorzugsweise sind die ersten Elektrodenschichten direkt elektrisch leitend mit der ersten Außenkontaktierung verbunden, das heißt die ersten Elektrodenschichten grenzen direkt an die erste Außenkontaktierung an und sind unmittelbar mit der ersten Außenkontaktierung verbunden. Die ersten Elektrodenschichten reichen vorzugsweise bis zur ersten Seitenfläche.

Weiterhin weist der Grundkörper eine zweite Außenkontaktierung auf, die auf einer der ersten Seitenfläche gegenüberliegenden zweiten Seitenfläche des Grundkörpers angeordnet ist und mit den zweiten Elektrodenschichten elektrisch leitend verbunden ist. Vorzugsweise sind die zweiten Elektrodenschichten direkt elektrisch leitend mit der zweiten Außenkontaktierung verbunden, das heißt die zweiten Elektrodenschichten grenzen direkt an die zweite Außenkontaktierung an und sind unmittelbar mit der zweiten Außenkontaktierung verbunden. Die zweiten Elektrodenschichten reichen vorzugsweise bis zur zweiten Seitenfläche.

Erfindungsgemäß weist der Grundkörper entlang der Schichtstapelrichtung eine Breite B auf. Dabei bezeichnet B die räumliche Ausdehnung des Grundkörpers des Vielschichtkondensators entlang der Schichtstapelrichtung. Weiterhin weist der Grundkörper senkrecht zur ersten Seitenfläche eine Höhe H auf. Die Höhe H kann somit als räumliche Ausdehnung des Grundkörpers senkrecht zur ersten Seitenfläche des Grundkörpers verstanden werden. Vorzugsweise verläuft die Höhe H auch senkrecht zur zweiten Seitenfläche des Grundkörpers. Des Weiteren weist der Grundkörper senkrecht zur Höhe H und senkrecht zur Schichtstapelrichtung eine Länge L auf. Die Länge L bezeichnet folglich die räumliche Ausdehnung des Grundkörpers in einer zur Breite B und zur Höhe H senkrechten Richtung.

Erfindungsgemäß gilt für das Verhältnis der Breite B zur Höhe H die Beziehung B/H ≥ 0,2. Gemäß einer bevorzugten Ausführungsform gilt B/H ≥ 0,3. Gemäß einer weiteren bevorzugten Ausführungsform gilt B/H ≥ 1,0. Gemäß einer besonders bevorzugten Ausführungsform gilt B/H ≈ 0,35. Gemäß einer weiteren Ausführungsform gilt für das Verhältnis der Länge L zur Breite B L/B ≥ 1. Weiterhin gilt vorzugsweise L/B ≤ 5, und besonders bevorzugt L/B ≤ 3,5.

Gemäß einer weiteren Ausführungsform gilt für das Verhältnis der Länge L zur Höhe H L/H ≥ 0,8. Gemäß einer bevorzugten Ausführungsform gilt L/H ≥ 1. Gemäß einer weiteren bevorzugten Ausführungsform gilt L/H ≥ 1,2.

Durch die hier angegebenen Verhältnisse zwischen der Breite B zur Höhe H des Grundkörpers kann bei einem hier beschriebenen keramischen Vielschichtkondensator das Verhältnis von Zuführungsquerschnitt der Elektrodenschichten zum Nutz-Querschnitt, das heißt zu der die Kapazität bestimmenden Fläche, deutlich erhöht werden. Dadurch kann erreicht werden, dass der hier beschriebene keramische Vielschichtkondensator einen besonders geringen ESR-Wert (equivalent series resistance, äquivalenter Serienwiderstand) aufweist. Erfindungsgemäß weist hier beschriebene keramische Vielschichtkondensator, z.B. mit einer Kapazität zwischen 4µF und 10µF, einen ESR zwischen 3 mΩ und 5 mΩ bei Betrieb bei einer Frequenz zwischen 100 kHz und 1 MHz aufweisen.

Erfindungsgemäß weist der Grundkörper dritte Elektrodenschichten auf, die weder mit der ersten noch mit der zweiten Außenkontaktierung elektrisch leitend verbunden sind. Die dritten Elektrodenschichten sind mit keiner Außenkontaktierung elektrisch leitend verbunden. Die dritten Elektrodenschichten können hier und im Folgenden auch als freie Elektroden (floating electrodes) bezeichnet werden.

Erfindungsgemäß überlappen die dritten Elektrodenschichten mit den ersten Elektrodenschichten. In anderen Worten weisen die dritten Elektrodenschichten jeweils zumindest einen Teilbereich auf, der bei einer gedanklichen Projektion in Schichtstapelrichtung des Stapels mit zumindest einem Teilbereich der ersten Elektrodenschichten zur Deckung gebracht werden könnte. Weiterhin überlappen die dritten Elektrodenschichten mit den zweiten Elektrodenschichten überlappen. Beispielsweise können jeweils eine erste und eine zweite Elektrodenschicht in einer gleichen Schichtebene des Grundkörpers voneinander beabstandet angeordnet sein und jeweils mit zumindest einer dritten Elektrode, die in einer weiteren Schichtebene angeordnet ist, überlappen.

Die Verwendung von ersten, zweiten und freien dritten Elektrodenschichten, das heißt die Verwendung von seriellen Innenelektroden, bewirkt vorteilhafterweise eine Erhöhung der Durchbruchfeldstärke, was sich förderlich für die Robustheit und die Zuverlässigkeit des Vielschichtkondensators auswirkt. Weiterhin wird dadurch eine Absenkung der dielektrischen Schichtstärke, das heißt der Schichtdicke der keramischen Schichten, ermöglicht, woraus sich als Folge eine Erhöhung des Querschnittes einer Elektrodenschicht pro Volumen Keramik und somit eine Verbesserung des ESR-Wertes (equivalent series resistance, äquivalenter Serienwiderstand) und eine Verbesserung der Stromtragfähigkeit des Bauteils für Anwendungsströme ergibt.

Gemäß einer weiteren Ausführungsform weisen die keramischen Schichten eine Schichtdicke zwischen 3 µm und 200 µm auf. Gemäß einer weiteren bevorzugten Ausführungsform weisen die keramischen Schichten eine Schichtdicke zwischen 10 µm und 100 µm auf. Besonders bevorzugt weisen die keramischen Schichten eine Schichtdicke von in etwa 25 µm auf.

Gemäß einer weiteren Ausführungsform weisen die Elektrodenschichten eine Schichtdicke zwischen 0,1 µm und 10 µm auf. Gemäß einer bevorzugten Ausführungsform weisen die Elektrodenschichten eine Schichtdicke zwischen 1 µm und 4 µm auf. Besonders bevorzugt weisen die Elektrodenschichten eine Schichtdicke von in etwa 3,5 µm auf.

Gemäß einer weiteren Ausführungsform weist der Grundkörper zumindest zehn keramische Schichten auf. Gemäß einer weiteren Ausführungsform weist der Grundkörper zumindest zehn erste Elektrodenschichten auf. Gemäß einer weiteren Ausführungsform weist der Grundkörper zumindest zehn zweite Elektrodenschichten auf.

Gemäß einer weiteren Ausführungsform gilt für die Anzahl der im Grundkörper vorgesehenen ersten Elektrodenschichten und der Breite B des Grundkörpers folgende Beziehung: Verhältnis der Anzahl der ersten Elektrodenschichten zur Breite B ≥ 10/mm. In anderen Worten weist der Grundkörper pro mm Breite mindestens zehn erste Elektrodenschichten auf. Weiterhin weist der Grundkörper vorzugsweise pro mm Breite mindestens zehn zweite Elektrodenschichten auf.

Gemäß einer weiteren Ausführungsform weisen die Elektrodenschichten ein unedles Metall auf. Vorzugsweise weisen die Elektrodenschichten Kupfer auf. Gemäß einer bevorzugten Ausführungsform bestehen die Elektrodenschichten aus Kupfer. Insbesondere nach der Versinterung des Vielschichtkondensators können die Elektrodenschichten aus reinem Kupfer bestehen. Aufgrund der hohen thermischen sowie elektrischen Leitfähigkeit von Kupfer kann bei dem hier beschriebenen Vielschichtkondensator ein besonders kleiner ESR-Wert (equivalent series resistance, äquivalenter Serienwiderstand) erzielt werden. Weiterhin kann durch die Verwendung unedler Metalle vorteilhafterweise der Herstellungsprozess des Vielschichtkondensators verbilligt werden.

Gemäß einer weiteren Ausführungsform sind die ersten und zweiten Seitenflächen oberflächenbehandelt. Beispielsweise können die ersten und zweiten Seitenflächen geläppt sein. Weiterhin ist es möglich, dass die ersten und zweiten Seitenflächen geschliffen, gescheuert, oder plasmageätzt sind. Mittels der oberflächenbehandelten Seitenflächen kann vorteilhafterweise ein besonders guter Kontakt zwischen den Außenkontaktierungen und den ersten beziehungsweise zweiten Elektrodenschichten erreicht werden. Insbesondere kann mittels der Oberflächenbehandlung der ersten und zweiten Seitenflächen zwischen einzelnen ersten Elektrodenschichten beziehungsweise zwischen einzelnen zweiten Elektrodenschichten vorhandenes Keramikmaterial zurückgenommen werden, so dass die ersten und zweiten Elektrodenschichten prozesstechnisch sicher an die Oberfläche des Grundkörpers gebracht werden können. Beispielsweise können die Außenkontaktierungen dann ohne Einbrand eines Gasflusses, beispielsweise mit einem standardmäßigen Sputterprozess, aufgebracht werden.

Gemäß einer weiteren Ausführungsform weisen die erste und die zweite Außenkontaktierung jeweils zumindest eine erste Sputterschicht auf, wobei die ersten Sputterschichten in direktem Kontakt mit den ersten oder zweiten Elektrodenschichten stehen. Vorzugsweise ist auf der ersten Seitenfläche des Grundkörpers eine erste Sputterschicht aufgebracht, die in direktem Kontakt mit Austrittsflächen der ersten Elektrodenschichten aus dem Grundkörper steht. Ebenso kann auf der zweiten Seitenfläche des Grundkörpers eine erste Sputterschicht aufgebracht sein, die in direktem Kontakt mit Austrittsflächen der zweiten Elektrodenschichten aus dem Grundkörper steht. Die Sputterschichten können beispielsweise eine Schichtdicke zwischen 0,1 µm und 1,5 µm aufweisen. Vorzugsweise weisen die ersten Sputterschichten Chrom auf oder bestehen aus Chrom.

Gemäß einer weiteren Ausführungsform weisen die erste und die zweite Außenkontaktierung jeweils eine zweite Sputterschicht auf, wobei die zweiten Sputterschichten vorzugsweise direkt auf den ersten Sputterschichten aufgebracht sind. Die zweiten Sputterschichten weisen vorzugsweise Kupfer auf oder bestehen aus Kupfer.

Gemäß einer weiteren Ausführungsform weisen die erste und die zweite Außenkontaktierung jeweils eine dritte Sputterschicht auf, wobei die dritten Sputterschichten vorzugsweise direkt auf den zweiten Sputterschichten aufgebracht sind. Die dritten Sputterschichten weisen vorzugsweise Gold auf oder bestehen aus Gold. Alternativ können die dritten Sputterschichten auch Silber aufweisen oder aus Silber bestehen.

Gemäß einer weiteren Ausführungsform weisen die keramischen Schichten ein Keramikmaterial auf, für das folgende Formel gilt:

Pb_{(1-1,5a-0,5b+1,5d+e+0,5f)}AₐB_{b}(Zr₁-xTiₓ)_{1-c-d-e-f} Li_{d}CₑFe_{f}Si_{c}O₃ + y·PbO (I)

wobei A aus der Gruppe ausgewählt ist, die aus La, Nd, Y, Eu, Gd, Tb, Dy, Ho, Er und Yb besteht; wobei B aus der Gruppe ausgewählt ist, die aus Na, K und Ag besteht; und wobei C aus der Gruppe ausgewählt ist, die aus Ni, Cu, Co und Mn besteht; mit 0 < a < 0,12; 0,05 ≤ x ≤ 0,3; 0 ≤ b < 0,12; 0 ≤ c < 0,12; 0 ≤ d < 0,12; 0 ≤ e < 0,12; 0 ≤ f < 0,12; 0 ≤ y < 1, wobei b + d + e + f > 0.

Vorzugsweise wird eine besonders Zr-reiche PZT-Mischkristallphase aus dem Phasendiagramm ausgewählt. Zudem wird durch die Bedingung b + d + e + f > 0 festgelegt, dass im Keramikmaterial neben einem Dotiermittel aus der definierten Gruppe A (Seltenerdelement) mindestens ein Element aus der aus Li, Na, K, Ag, Fe, Ni, Cu, Co und Mn bestehenden Gruppe (Lithium, Eisen sowie Gruppen B und C) vorhanden sein muss. Hierdurch kann ein bei Temperaturen von 1000 °C bis 1120 °C sinterfähiges Keramikmaterial bereitgestellt werden, was eine Kombination mit anderen, bei höheren Temperaturen nicht beständigen Werkstoffen/Materialien bereits während des Herstellungsverfahrens des Keramikmaterials ermöglicht. Beispielsweise wird das Sintern des Keramikmaterials ("Co-firing"-Verfahren) mit Elektrodenschichten aus unedlen Metallen, wie etwa Silber oder Kupfer, möglich. Zudem besitzt das keramische Material verglichen mit dem nur durch Gruppe A dotiertem PZT-Material eine höhere Schaltfeldstärke und/oder höhere relative Permittivität (Dielektrizitätskonstante).

Zudem begünstigen niedrige Sintertemperaturen die Bildung kleiner Korngrößen des keramischen Materials, was die dielektrischen Eigenschaften günstig beeinflusst. Genauer werden die dielektrischen Eigenschaften von PZT-Keramiken im Allgemeinen auch von der Domänengröße bestimmt. Unter Domänen versteht man Bereiche in der Keramik mit gleicher Polarisation. Die Domänengröße steht in Abhängigkeit mit der Korngröße. Die Anzahl der Domänen pro Korn nimmt mit zunehmender Korngröße zu. Die veränderte Domänengröße hat Konsequenzen für die Materialeigenschaften der Keramik. Somit ist es erstrebenswert, die Korngröße beziehungsweise das Kornwachstum steuern zu können.

Vorzugsweise weist die dotierte Bleizirkonat-Titanat-Keramik ein Perowskit-Gitter auf, welches sich durch die allgemeine Formel ABO₃ beschreiben lässt, wobei A für die A-Plätze und B für die B-Plätze des Perowskit-Gitters stehen.

Das Perowskit-Gitter zeichnet sich durch eine hohe Toleranz gegenüber Dotierungen und Leerstellen aus.

Die Perowskit-Struktur des Bleizirkonat-Titanats (PZT) lässt sich durch die allgemeine Formel ABO₃ beschreiben. Eine Elementarzelle des PZT-Kristallgitters lässt sich durch einen Kubus beschreiben. Die A-Plätze sind durch Pb²⁺-Ionen besetzt, welche auf den Ecken des Kubus sitzen. In der Mitte jeder Kubusfläche sitzt jeweils ein O²⁻Ion. Im Zentrum des Kubus befindet sich ein Ti⁴⁺-Ion und ein Zr⁴⁺-Ion (B-Plätze). Diese Struktur weist eine hohe Toleranz gegenüber Substitution der Metall-Ionen durch andere Metall-Ionen und Fehlstellen auf, weshalb sie sich gut dotieren lässt.

Je nach Größenunterschied zwischen dem durch Dotierung eingeführten Ion und dem ersetzten Ion kann es zur Verzerrung des hoch-symmetrischen Koordinationspolyeders kommen. Diese Verzerrung kann das Symmetriezentrum des Kristalls verändern und so die Polarisierbarkeit beeinflussen.

Die verschiedenen Möglichkeiten der Dotierung lassen sich anhand der Wertigkeit des Dotierungsions klassifizieren. Die isovalente Dotierung, also der Ersatz eines Ions durch ein anderes Ion mit gleicher Wertigkeit wirkt sich nicht auf mögliche Leerstellen im Keramikmaterial aus. Ersetzen niederwertige Kationen (Akzeptoren) Kationen mit einer höheren Wertigkeit, so werden Leerstellen im Anionen-Gitter erzeugt. Höhervalente Kationen (Donatoren) verursachen, wenn sie niederwertigere Kationen ersetzen, Leerstellen im Kationen-Gitter. Die Dotierung mit Akzeptoren und Donatoren führt jeweils zu charakteristischen Änderungen der Materialeigenschaften. Akzeptordotierte Keramiken werden auch als "harte", donordotierte Keramiken als "weiche" Keramiken bezeichnet.

Eine Dotierung, beispielsweise mit Nd³⁺ (oder einem anderen Seltenerdelement aus der Gruppe A), auf den A-Plätzen stellt eine Donator-Dotierung dar. Aufgrund des Ionenradius von Neodym wird dieses auf den Pb²⁺-Plätzen eingebaut. Der Ladungsausgleich erfolgt durch die entsprechende Bildung von Pb-Leerstellen. Die Auswirkung der Dotierung sind metrische Änderungen des Gitters und die Beeinflussung länger wirkender Wechselwirkungen zwischen den Elementarzellen.

Eine Dotierung, beispielsweise mit K⁺ oder Fe³⁺, auf den A-bzw. B-Plätzen stellt eine Akzeptor-Dotierung dar. Aufgrund des Ionenradius von Kalium wird dieses auf den Pb²⁺-Plätzen eingebaut, während Fe³⁺ auf den Zr⁴⁺ bzw. Ti⁴⁺-Plätzen eingebaut wird. Der Ladungsausgleich erfolgt durch Reduzierung von Pb²⁺-Leerstellen (A-Vakanzen) und/oder die entsprechende Bildung von Sauerstoff-Leerstellen. Die Auswirkung der Dotierung sind das Kornwachstum und die Sinterverdichtung fördernde Sauerstoff-Leerstellenbildung, die bei der Sintertemperatur durch K-Akzeptoren induziert wird. Im Prozess der Abkühlung kann eine Rekombination mit den Nd-Donatoren unter Bildung quasi neutraler {Nd/K} Defektpaare erfolgen, so dass in der fertigen Keramik keine oder eine nur sehr geringe Blei- bzw. Sauerstoff-Leerstellenkonzentration vorliegt.

Diese Dotierung wirkt sich auf das Kornwachstum des Materials aus, welches von der Konzentration der eingebrachten Dotierung abhängig ist. Kleine Dotierungsmengen tragen hierbei zum Kornwachstum bei, wohingegen zu große Mengen an Dotierungsionen das Kornwachstum hemmen können.

Die Eigenschaften von Donator-dotierten PZT-Materialien, wie sie in dem Fall vorliegen, wo Nd Pb-Plätze einnimmt, basieren im wesentlichen auf einer erhöhten Domänenbeweglichkeit, die durch die Pb-Leerstellen verursacht wird. Die Leerstellen führen dazu, dass sich die Domänen bereits von kleinen elektrischen Feldern beeinflussen lassen. Dies führt im Vergleich mit undotierten PZT-Keramiken zu einer leichteren Verschiebbarkeit der Domänengrenzen und somit zu höheren Dielektrizitätskonstanten.

Im Keramikmaterial sind Akzeptor- und Donator-Dotierungen gleichzeitig vorhanden. Dies führt dazu, dass die negativen Eigenschaften, welche auftreten, wenn die Keramik mit nur einer der beiden Dotierungsarten dotiert wurde, kompensiert werden. Würde beispielsweise nur eine Akzeptor-Dotierung vorliegen, so führt dies oft zu sinkenden dielektrischen Konstanten, das heißt, die Konstanten liegen unter denen der undotierten Keramik. Liegt nur eine Donator-Dotierung vor, so wird das Kornwachstum gehemmt, und die Körner der Keramik erreichen nicht die gewünschte Größe. Die vorhandene Kombination der Dotierungen hebt sich jedoch in diesen Punkten positiv von der undotierten Keramik ab. Sie weist höhere Dielektrizitätskonstanten auf, welches auch noch bei tieferen Sintertemperaturen gegeben ist.

Gemäß einer bevorzugten Ausführungsform gilt 0,1 ≤ x ≤ 0,2, da in diesem Bereich die Polarisationskurven besser einstellbar sind.

Gemäß einer weiteren Ausführungsform gilt
0 ≤ y < 0,05.

Gemäß einer weiteren Ausführungsform gilt 0,001 < b < 0,12, wobei weiter bevorzugt d = e = f = 0 gilt.

Gemäß einer weiteren Ausführungsform gilt 0,001 < e < 0,12, wobei weiter bevorzugt b = d = f = 0 gilt.

Gemäß einer weiteren bevorzugten Ausführungsform ist B Natrium (Na). Hierdurch werden die Materialeigenschaften besonders vorteilhaft beeinflusst, insbesondere die Sintertemperatur im Vergleich zu lediglich ein Seltenerdelement enthaltendem PZT-Material erniedrigt, und gleichzeitig die Schaltfeldstärke erhöht.

Gemäß einer weiteren bevorzugten Ausführungsform beträgt die relative Permittivität bei einer elektrischen Feldstärke von 1 kV/mm, bevorzugt 2 kV/mm, wenigstens 60 % der relativen Permittivität bei einer elektrischen Feldstärke von 0 kV/mm. Weiter bevorzugt beträgt die relative Permittivität (Dielektrizitätskonstante) des keramischen Materials bei einer Feldstärke von 2 bis 5 kV/mm, bevorzugtl kV/mm bis 10 kV/mm, wenigstens 60 % der relativen Permittivität bei einer elektrischen Feldstärke von 0 kV/mm. Die Messungen werden vorzugsweise bei einer Temperatur des keramischen Materials von 125°C durchgeführt.

Gemäß einer weiteren bevorzugten Ausführungsform besitzt das Keramikmaterial bei einer elektrischen Feldstärke von 1 kV/mm, bevorzugt 2 kV/mm eine relative Permittivität von mindestens 500, vorzugsweise mindestens 1500. Weiter bevorzugt besitzt das Keramikmaterial bei einer elektrischen Feldstärke von 2 bis 5 kV/mm, bevorzugt 1 kV/mm bis 10 kV/mm, eine relative Permittivität von mindestens 500, vorzugsweise mindestens 1500. Die Messungen werden vorzugsweise bei einer Temperatur des keramischen Materials von 125°C durchgeführt.

Die Messung der Polarisationshysterese ist eine Standardmethode zur Bestimmung der relativen Permittivität (Dielektrizitätskonstante). Zur frequenzunabhängigen Messung sind quasistatische Verfahren bekannt, bei dem die Hystereseschleife punktweise gemessen wird. Beispielsweise können Polarisationsmessungen mit Hilfe des TF Analyser 2000 der Firma aixACCT Systems GmbH durchgeführt werden.

Gemäß einer weiteren bevorzugten Ausführungsform ist das Keramikmaterial ein antiferroelektrisches Dielektrikum. Hierzu wird das Grundmaterial PZT vorzugsweise aus dem antiferroelektrisch-orthorhombischen Phasengebiet (O-Phase) verwendet. Die antiferroelektrische Ordnung ist durch eine Überlagerung mehrerer polarer Teilgitter, deren elektrische Dipolmomente sich gegenseitig aufheben, gekennzeichnet. Ein antiferroelektrischer Kristall besitzt somit keine spontane Polarisation, wohl aber besondere dielektrische Eigenschaften. Legt man ein elektrisches Feld an das Antiferroelektrikum an, verhält sich es zunächst wie ein lineares Dielektrikum. Ab einer bestimmten kritischen Feldstärke wird ein sprunghafter Übergang in die ferroelektrische Phase induziert und die ehemals antiparallelen Dipole klappen in die dann energetisch günstigere, parallele, Orientierung um. Der umgekehrte Übergang findet dagegen bei einer geringeren Feldstärke statt. Dies resultiert in einer sogenannten Doppelhystereseschleife.

Antiferroelektrischen Keramikmaterialien besitzen verglichen mit ferroelektrischen Keramikmaterialien eine weniger stark ausgeprägte Polarisations-Feldstärke-Hysterese. Dies führt bei Verwendung in Kondensatoren zu geringeren energetischen Verlusten. Aus diesem Grund ist die Verwendung von antiferroelektrischen Keramikmaterialien bevorzugt.

Zur Herstellung von reinen und verschieden dotierten BleiZirkonat-Titanat- (PZT-) Pulvern können das klassische Mischoxidverfahren oder auch lösungsmittelbasierte Verfahren, die auch "Sol-Gel"-Verfahren genannt werden, verwendet werden. Ausgangspunkt sind z.B. Lösungen der Acetate oder Alkoholate der konstituierenden Metalle, die über verschiedene Trocknungsverfahren in granulierte Xerogele, die keramischen Vorläufersubstanzen (Precursor), überführt werden. Zur Trocknung stehen beispielsweise das Sprühtrocknen und Sprühgefriergranulation mit anschließender Gefriertrocknung zur Verfügung. Die Precursoren werden anschließend zu den Oxiden pyrolysiert. Derartig hergestellte Pulver lassen sich mit wenig Aufwand deagglomerieren und für die weitere Prozessierung konditionieren.

Ein hier beschriebener keramischer Vielschichtkondensator zeichnet sich insbesondere durch einen besonders geringen ESR-Wert (equivalent series resistance, äquivalenter Serienwiderstand) sowie einen besonders geringen ESL-Wert (equivalent series inductivity, aquivalente Serieninduktivität) aus.

Gleichzeitig ist die hier beschriebene Anordnung der Elektrodenschichten günstig für die Prozessführung bei Herstellung eines hier beschriebenen Vielschichtkondensators. Sowohl bei Entbindern als auch beim Sintern ist ein GasAustausch/ Gleichgewicht von Entbinderungsprodukten und Prozess-Gasen erforderlich, welcher bei dem hier beschriebenen Vielschichtkondensator begünstigt wird. Der Aufbau befördert über die in seitlicher Richtung relativ kurzen Elektrodenschichten eine verbesserte Möglichkeit der Prozessführung, wodurch als Folge auch im Volumen relativ, gemessen an herkömmlichen Vielschichtkondensatoren, große Keramikteile möglich sind. Weiterhin ergeben sich bei einem hier beschriebenen Vielschichtkondensator Synergieeffekte aus der beschriebenen Anordnung der Elektrodenschichten und dem gewählten Keramikmaterial der keramischen Schichten, welche sich positiv auf den ESR-Wert, den ESL-Wert sowie die mechanische und thermische Robustheit auswirken. Insbesondere kann die Kombination der Keramik zusammen mit den oben angegebenen Aspektverhältnissen zwischen B, H und L sowie mit der Geometrie der Elektrodenschichten die elektrischen und thermischen Eigenschaften des Bauelements verbessern. So wirken sich beispielsweise die kurzen Wege, die der Strom durch die Elektroden nehmen kann (Geometrie-Effekt) zusammen mit der thermischen Stabilität des Isolationswiderstandes (Keramikeigenschaft) äußerst positiv auf das Stromtragfähigkeitsverhalten des Bauteils aus.

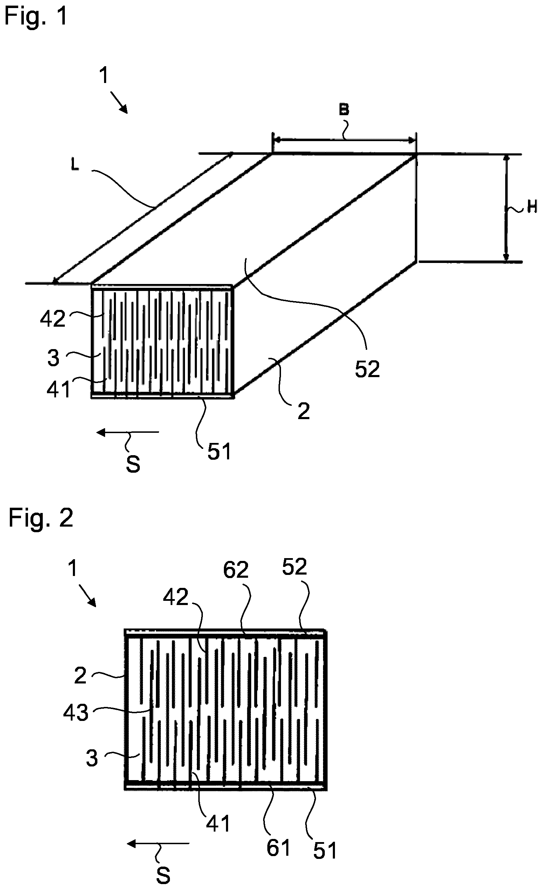

Weitere Vorteile und vorteilhafte Ausführungsformen des keramischen Vielschichtkondensators ergeben sich aus den im Folgenden in Verbindung mit den Figuren 1 und 2 beschriebenen Ausführungsformen.

Es zeigen:
- Figur 1: eine perspektivische schematische Ansicht eines keramischen Vielschichtkondensators gemäß einer Ausführungsform,
- Figur 2: einen Querschnitt des keramischen Vielschichtkondensators aus Figur 1.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen. Vielmehr können einzelne Elemente, wie zum Beispiel Schichten, Bauteile und Bereiche, zur besseren Darstellbarkeit und/oder zum besseren Verständnis übertrieben dick oder groß dimensioniert dargestellt sein.

Die Figuren 1 und 2 zeigen verschiedene schematische Ansichten eines keramischen Vielschichtkondensators 1 gemäß einem Ausführungsbeispiel. Der Vielschichtkondensator 1 umfasst einen Grundkörper 2, der eine Quaderform mit sechs Seitenflächen aufweist. Der Grundkörper 2 weist keramische Schichten 3 sowie zwischen den keramischen Schichten 3 angeordnete erste und zweite Elektrodenschichten 41, 42 auf, wobei die keramischen Schichten 3 und die Elektrodenschichten 41, 42 entlang einer Schichtstapelrichtung S zu einem Stapel angeordnet sind. Insbesondere weist der Grundkörper 2 zumindest 10 erste und zumindest 10 zweite Elektrodenschichten 41, 42 auf. Die keramischen Schichten 3 weisen im gezeigten Ausführungsbeispiel eine Schichtdicke von in etwa 25 µm auf. Die Elektrodenschichten 41, 42 weisen eine Schichtdicke von in etwa 3,5 µm auf. Alternativ können die keramischen Schichten 3 und die Elektrodenschichten 41, 42 auch andere Schichtdicken aufweisen.

Die Elektrodenschichten weisen im gezeigten Ausführungsbeispiel Kupfer auf. Dadurch kann einerseits erreicht werden, dass der Vielschichtkondensator 1 einen möglichst kleinen ESR-Wert aufweist, und zum anderen kann der Herstellungsprozess des Vielschichtkondensators 1 verbilligt werden.

Der Vielschichtkondensator 1 weist weiterhin eine erste Außenkontaktierung 51, die auf einer ersten Seitenfläche 61 des Grundkörpers 2 angeordnet ist, sowie eine zweite Außenkontaktierung 52, die auf einer zweiten Seitenfläche 62 des Grundkörpers 2 angeordnet ist, auf. Die ersten Elektrodenschichten 41 sind dabei elektrisch leitend mit der ersten Außenkontaktierung 51 und die zweiten Elektrodenschichten 42 elektrisch leitend mit der zweiten Außenkontaktierung 52 verbunden. Die ersten und zweiten Seitenflächen 61, 62 sind oberflächenbehandelt, wobei die Oberflächenbehandlung vorzugsweise vor dem Aufbringen der Außenkontaktierungen 51, 52 durchgeführt wird. Insbesondere können die ersten und zweiten Seitenflächen 61, 62 geläppt, gescheuert, geschliffen oder plasmageätzt sein. Mittels der oberflächenbehandelten Seitenflächen 61, 62 kann vorteilhafterweise ein besonders guter Kontakt zwischen den Außenkontaktierungen 51, 52 und den ersten beziehungsweise zweiten Elektrodenschichten 41, 42 erreicht werden.

Im gezeigten Ausführungsbeispiel sind jeweils eine erste und eine zweite Elektrodenschicht 41, 42 voneinander beabstandet in einer gleichen Ebene angeordnet. Diese Ebene ist durch eine Schichtebene gebildet, die senkrecht zu Schichtstapelrichtung S des Stapels ausgebildet ist. Zwischen den ersten Elektrodenschichten 41 und den zweiten Elektrodenschichten 42 ist dabei ein sogenanntes Gap, das heißt eine Lücke, vorhanden. Diese Lücke stellt einen Bereich zwischen einer ersten Elektrodenschicht 41 und einer zweiten Elektrodenschicht 42 in der Schichtebene dar, in dem keine Elektrodenschichten angeordnet sind. Gemäß einem alternativen Ausführungsbeispiel ist es auch möglich, dass die ersten und zweiten Elektrodenschichten 41, 42 jeweils in verschiedenen Schichtebenen angeordnet sind.

Der Grundkörper 2 weist weiterhin dritte Elektrodenschichten 43 auf, die weder mit der ersten noch mit der zweiten Außenkontaktierung 51, 52 elektrisch leitend verbunden sind. Die dritten Elektrodenschichten 43 überlappen sowohl mit den ersten als auch mit den zweiten Elektrodenschichten 41, 42, das heißt die dritten Elektrodenschichten 43 weisen jeweils zumindest einen Teilbereich auf, der bei einer gedanklichen Projektion in Schichtstapelrichtung S des Stapels mit zumindest einem Teilbereich sowohl der ersten als auch der zweiten Elektrodenschichten 41, 42 zur Deckung gebracht werden könnte. Gemäß dem alternativen Ausführungsbeispiel, bei dem die ersten und zweiten Elektrodenschichten 41, 42 jeweils in verschiedenen Schichtebenen angeordnet sind, ist es möglich, dass die ersten und zweiten Elektrodenschichten 41, 42 miteinander überlappen.

Die erste und zweite Außenkontaktierung 51, 52 weisen jeweils eine erste Sputterschicht auf, wobei die ersten Sputterschichten jeweils direkt auf dem Grundkörper 2 aufgebracht sind. Die ersten Sputterschichten stehen dabei in direktem Kontakt mit den ersten beziehungsweise zweiten Elektrodenschichten 41, 42. Die ersten Sputterschichten weisen vorzugsweise Chrom auf. Auf den ersten Sputterschichten sind jeweils zweite Sputterschichten aufgebracht, wobei die zweiten Sputterschichten vorzugsweise Kupfer aufweisen. Weiterhin sind auf den zweiten Sputterschichten jeweils dritte Sputterschichten, die vorzugsweise Gold aufweisen, aufgebracht. Alternativ können die dritten Sputterschichten auch Silber aufweisen.

Der Grundkörper 2 weist entlang der Schichtstapelrichtung S eine Breite B auf. Mit anderen Worten bezeichnet B die Ausdehnung des Grundkörpers 2 in Richtung parallel zur Schichtstapelrichtung S. Vorzugsweise sind im Grundkörper 2 pro mm Breite B des Grundkörpers mindestens 10 erste Elektrodenschichten und mindestens 10 zweite Elektrodenschichten vorgesehen. Weiterhin weist der Grundkörper 2 senkrecht zur ersten Seitenfläche 51 eine Höhe H auf. Der Grundkörper 2 weist also senkrecht zur ersten Seitenfläche 51 eine Ausdehnung auf, die der Höhe H entspricht. Des Weiteren weist der Grundkörper 2 senkrecht zur Höhe H sowie senkrecht zur Schichtstapelrichtung S eine Länge L auf, die der Ausdehnung des Grundkörpers 2 senkrecht zur Schichtstapelrichtung sowie senkrecht zur Höhe H entspricht. Für das Verhältnis der Breite B zur Höhe H des Grundkörpers 2 gilt B/H ≥ 0,2. Weiterhin gilt für das Verhältnis der Länge L zur Breite B des Grundkörpers L/B ≥ 1 sowie für das Verhältnis der Länge L zur Höhe H des Grundkörpers L/H ≥ 1.

Im gezeigten Ausführungsbeispiel weist der Grundkörper 2 eine Breite B von in etwa 2,5 mm, eine Höhe H von in etwa 7,0 mm und eine Länge L von in etwa 7,0 mm auf. Somit ist das Verhältnis B/H im gezeigten Ausführungsbeispiel ungefähr gleich 0,36. Das Verhältnis L/B beträgt in etwa 2,8 und das Verhältnis L/H in etwa 1,0.

Der Vielschichtkondensator 1 gemäß dem gezeigten Ausführungsbeispiel zeichnet sich insbesondere durch einen niedrigen ESR-Wert, einen niedrigen ESL-Wert sowie eine hohe mechanische und thermische Robustheit aus. Beispielsweise weist der im Ausführungsbeispiel gemäß den Figuren 1 und 2 gezeigte keramische Vielschichtkondensator (380V / 10µF) folgende frequenzabhängigen Werte auf: ESR(min)= 3 mΩ, ESR(100kHz)= 5 mΩ und ESL < 4 nH. Weiterhin kann der Vielschichtkondensator 1 kostengünstig produziert werden.

### Bezugszeichenliste

- 1: Vielschichtkondensator
- 2: Grundkörper
- 3: keramische Schichten
- 41: erste Elektrodenschichten
- 42: zweite Elektrodenschichten
- 43: dritte Elektrodenschichten
- 51: erste Außenkontaktierung
- 52: zweite Außenkontaktierung
- 61: erste Seitenfläche
- 62: zweite Seitenfläche
- H: Höhe des Grundkörpers
- B: Breite des Grundkörpers
- L: Länge des Grundkörpers
- S: Schichtstapelrichtung

## Patentansprüche

1. Keramischer Vielschichtkondensator (1) mit
- einem Grundkörper (2), der keramische Schichten (3), die entlang einer Schichtstapelrichtung (S) zu einem Stapel angeordnet sind, und zwischen den keramischen Schichten (3) angeordnete erste und zweite Elektrodenschichten (41, 42) aufweist,
- einer ersten Außenkontaktierung (51), die auf einer ersten Seitenfläche (61) des Grundkörpers (2) angeordnet und mit den ersten Elektrodenschichten (41) elektrisch leitend verbunden ist, und
- einer zweiten Außenkontaktierung (52), die auf einer der ersten Seitenfläche (61) gegenüber liegenden zweiten Seitenfläche (62) des Grundkörpers (2) angeordnet und mit den zweiten Elektrodenschichten (42) elektrisch leitend verbunden ist, wobei
- der Grundkörper (2) entlang der Schichtstapelrichtung (S) eine Breite B aufweist,
- der Grundkörper (2) senkrecht zur ersten Seitenfläche (61) eine Höhe H aufweist,
- der Grundkörper (2) senkrecht zur Höhe H und senkrecht zur Schichtstapelrichtung (S) eine Länge L aufweist,
- wobei B/H ≥ 0,2 gilt,
- wobei der Grundkörper (2) dritte Elektrodenschichten (43) aufweist, die weder mit der ersten noch mit der zweiten Außenkontaktierung (51, 52) elektrisch leitend verbunden sind und jeweils mit den ersten und zweiten Elektrodenschichten (41, 42) überlappen,
- wobei der Vielschichtkondensator einen ESR-Wert zwischen 3 mΩ und 5 mΩ bei Betrieb bei einer Frequenz zwischen 100 kHz und 1 MHz aufweist.

2. Vielschichtkondensator nach Anspruch 1, wobei L/B ≥ 1 gilt.

3. Vielschichtkondensator nach einem der Ansprüche 1 oder 2, wobei L/H ≥ 1 gilt.

4. Vielschichtkondensator nach einem der vorhergehenden Ansprüche, wobei die Elektrodenschichten (3) eine Schichtdicke zwischen 0,1 µm und 10 µm aufweisen.

5. Vielschichtkondensator nach einem der vorhergehenden Ansprüche, wobei der Grundkörper (2) zumindest 10 erste Elektrodenschichten (41) und zumindest 10 zweite Elektrodenschichten (42) aufweist.

6. Vielschichtkondensator nach einem der vorhergehenden Ansprüche, wobei folgende Beziehung gilt:
Anzahl der ersten Elektrodenschichten / Breite B ≥ 10/mm.

7. Vielschichtkondensator nach einem der vorhergehenden Ansprüche, wobei die Elektrodenschichten (41, 42, 43) Kupfer aufweisen.

8. Vielschichtkondensator nach einem der vorhergehenden Ansprüche, wobei die ersten und zweiten Seitenflächen (61, 62) oberflächenbehandelt sind.

9. Vielschichtkondensator nach Anspruch 8, wobei die ersten und zweiten Seitenflächen (61, 62) geläppt, geschliffen oder plasmageätzt sind.

10. Vielschichtkondensator nach einem der vorhergehenden Ansprüche, wobei die erste und die zweite Außenkontaktierung (51, 52) jeweils zumindest eine Sputterschicht aufweisen, die in direktem Kontakt mit den ersten oder zweiten Elektrodenschichten (41, 42) stehen.

11. Vielschichtkondensator nach einem der vorhergehenden Ansprüche, wobei die erste und die zweite Außenkontaktierung (51, 52) jeweils drei Sputterschichten aufweisen, wobei die ersten Sputterschichten Chrom, die zweiten Sputterschichten Kupfer und die dritten Sputterschichten Gold oder Silber aufweisen.

12. Vielschichtkondensator nach einem der vorhergehenden Ansprüche, wobei die keramischen Schichten (3) ein Keramikmaterial aufweisen, für das folgende Formel gilt:
Pb_{(1-1,5a-0,5b+1,5d+e+0,5f)}AₐB_{b}(Zr₁₋ₓTiₓ)_{1-c-d-e-f} Li_{d}CₑFe_{f}Si_{c}O₃ + y·PbO (I)
wobei
A aus der Gruppe ausgewählt ist, die aus La, Nd, Y, Eu, Gd, Tb, Dy, Ho, Er und Yb besteht;
B aus der Gruppe ausgewählt ist, die aus Na, K und Ag besteht;
C aus der Gruppe ausgewählt ist, die aus Ni, Cu, Co und Mn besteht; und
0 < a < 0,12
0,05 ≤ x ≤ 0,3
0 ≤ b < 0,12
0 ≤ c < 0,12
0 ≤ d < 0,12
0 ≤ e < 0,12,
0 ≤ f < 0,12,
0 ≤ y < 1, wobei
b + d + e + f > 0.

## Claims

1. Ceramic multi-layered capacitor (1) comprising
- a main body (2), which has ceramic layers (3) arranged along a layer stacking direction (S) to form a stack, and first and second electrode layers (41, 42) arranged between the ceramic layers (3),
- a first external contact-connection (51), which is arranged on a first side surface (61) of the main body (2) and is electrically conductively connected to the first electrode layers (41), and
- a second external contact-connection (52), which is arranged on a second side surface (62) of the main body (2), said second side surface being situated opposite the first side surface (61), and is electrically conductively connected to the second electrode layers (42), wherein
- the main body (2) has a width B along the layer stacking direction (S),
- the main body (2) has a height H perpendicular to the first side surface (61),
- the main body (2) has a length L perpendicular to the height H and perpendicular to the layer stacking direction (S),
- wherein B/H ≥ 0.2 holds true,
- wherein the main body (2) has third electrode layers (43), which are electrically conductively connected neither to the first nor to the second external contact-connection (51, 52) and in each case overlap the first and second electrode layers (41, 42),
- wherein the multi-layered capacitor has an ESR value of between 3mΩ and 5mΩ during operation at a frequency of between 100 kHz and 1 MHz.

2. Multi-layered capacitor according to Claim 1, wherein L/B ≥ 1 holds true.

3. Multi-layered capacitor according to either of Claims 1 and 2, wherein L/H ≥ 1 holds true.

4. Multi-layered capacitor according to any of the preceding claims, wherein the electrode layers (3) have a layer thickness of between 0.1 µm and 10 µm.

5. Multi-layered capacitor according to any of the preceding claims, wherein the main body (2) has at least 10 first electrode layers (41) and at least 10 second electrode layers (42).

6. Multi-layered capacitor according to any of the preceding claims, wherein the following relationship holds true:
number of first electrode layers/width B ≥ 10/mm.

7. Multi-layered capacitor according to any of the preceding claims, wherein the electrode layers (41, 42, 43) comprise copper.

8. Multi-layered capacitor according to any of the preceding claims, wherein the first and second side surfaces (61, 62) are surface-treated.

9. Multi-layered capacitor according to Claim 8, wherein the first and second side surfaces (61, 62) are lapped, ground or plasma-etched.

10. Multi-layered capacitor according to any of the preceding claims, wherein the first and second external contact-connections (51, 52) each have at least one sputtering layer in direct contact with the first or second electrode layers (41, 42).

11. Multi-layered capacitor according to any of the preceding claims, wherein the first and second external contact-connections (51, 52) each have three sputtering layers, wherein the first sputtering layers comprise chromium, the second sputtering layers comprise copper and the third sputtering layers comprise gold or silver.

12. Multi-layered capacitor according to any of the preceding claims, wherein the ceramic layers (3) comprise a ceramic material for which the following formula holds true:
Pb_{(1-1.5a-0.5b+1.5d+e+0.5f)}AₐB_{b}(Zr₁₋ₓTiₓ)_{1-c-d-e-f} Li_{d}CₑFe_{f}Si_{c}O₃ + y.PbO (I)
wherein
A is selected from the group consisting of La, Nd, Y, Eu, Gd, Tb, Dy, Ho, Er and Yb;
B is selected from the group consisting of Na, K and Ag;
C is selected from the group consisting of Ni, Cu, Co and Mn; and
0 < a < 0.12
0.05 ≤ × ≤ 0.3
0 ≤ b < 0.12
0 ≤ c < 0.12
0 ≤ d < 0.12
0 ≤ e < 0.12
0 ≤ f < 0.12
0 ≤ y < 1, wherein
b + d + e + f > 0.

## Revendications

1. Condensateur céramique multicouche (1) présentant
- un corps de base (2) qui présente des couches céramiques (3) empilées dans une direction (S) d'empilement des couches, et des premières et deuxièmes couches d'électrode (41, 42) disposées entre les couches céramiques (3),
- un premier contact extérieur (51) disposé sur une première surface latérale (61) du corps de base (2) et relié de manière électriquement conductrice aux premières couches d'électrode (41),
- un deuxième contact extérieur (52) disposé sur une deuxième surface latérale (62) du corps de base (2) située face à la première surface latérale (61) et relié de manière électriquement conductrice aux deuxièmes couches d'électrode (42),
- le corps de base (2) présentant une largeur B dans la direction (S) d'empilement des couches,
- le corps de base (2) présentant une hauteur H perpendiculairement à la première surface latérale (61),
- le corps de base (2) présentant une longueur L perpendiculairement à la hauteur H et perpendiculairement à la direction (S) d'empilement des couches,
- B/H étant ≥ 0,2,
- le corps de base (2) présentant des troisièmes couches d'électrode (43) qui ne sont reliées de manière électriquement conductrice ni au premier ni au deuxième contact extérieur (51, 52) et qui recouvrent chacune les premières et les deuxièmes couches d'électrode (41, 42),
- le condensateur multicouche présentant une valeur ESR comprise entre 3 mΩ et 5 mΩ lorsqu'il fonctionne à fréquence comprise entre 100 kHz et 1 MHz.

2. Condensateur multicouche selon la revendication 1, dans lequel L/B ≥ 1.

3. Condensateur multicouche selon l'une des revendications 1 ou 2, dans lequel L/H ≥ 1.

4. Condensateur multicouche selon l'une des revendications précédentes, dans lequel les couches céramiques (3) présentent une épaisseur comprise entre 0,01 µm et 10 µm.

5. Condensateur multicouche selon l'une des revendications précédentes, dans lequel le corps de base (2) présente au moins dix premières couches d'électrode (41) et au moins dix deuxièmes couches d'électrode (42).

6. Condensateur multicouche selon l'une des revendications précédentes, qui respecte la relation suivante : nombre des premières couches d'électrode / largeur B ≥ 10/mm.

7. Condensateur multicouche selon l'une des revendications précédentes, dans lequel les couches d'électrode (41, 42, 43) présentent du cuivre.

8. Condensateur multicouche selon l'une des revendications précédentes, dans lequel les premières et les deuxièmes surfaces latérales (61, 62) sont traitées en surface.

9. Condensateur multicouche selon la revendication 8, dans lequel les premières et les deuxièmes surfaces latérales (61, 62) sont rodées, meulées ou gravées au plasma.

10. Condensateur multicouche selon l'une des revendications précédentes, dans lequel le premier et le deuxième contact extérieur (51, 52) présentent chacun une ou plusieurs couches apportées par pulvérisation et en contact direct avec les premières ou les deuxièmes couches d'électrode (41, 42).

11. Condensateur multicouche selon l'une des revendications précédentes, dans lequel le premier et le deuxième contact extérieur (51, 52) présentent chacun trois couches apportées par pulvérisation, les premières couches de pulvérisation présentant du chrome, les deuxièmes couches de pulvérisation du cuivre et les troisièmes couches de pulvérisation de l'or ou de l'argent.

12. Condensateur multicouche selon l'une des revendications précédentes, dans lequel les couches céramiques (3) présentent un matériau céramique de formule :
Pb_{(1-1,5a-0,5b+1,5d+e+0,5f)}AₐB_{b}(Zr₁₋ₓTiₓ)_{1-r-d-e-f} Li_{d}CₑFe_{f}Si_{c}O₃ + y·PbO (I)
dans laquelle
A est sélectionné dans l'ensemble constitué de La, Nd, Y, Eu, Gd, Tb, Dy, Ho, Er et Yb,
B est sélectionné dans l'ensemble constitué de Na, K et Ag,
C est sélectionné dans l'ensemble constitué de Ni, Cu, Co et Mn et
0 < a < 0,12
0,05 ≤ x ≤ 0,3
0 ≤ b < 0,12
0 ≤ c < 0,12
0 ≤ d < 0,12
0 ≤ e < 0,12
0 ≤ f < 0,12
0 ≤ y < 1,
et
b + d + e + f > 0.
